# EUROPEAN PATENT APPLICATION

(11) **EP 3 905 638 A1**
(43) Date of publication of application: **03.11.2021**
(21) Application number: 20171961.4
(22) Date of filing: 29.04.2020
(51) Int. Cl.: H04L 29/08, H04L 12/715

(54) **DYNAMIC CONFIGURATION OF AN INDUSTRIAL DATA NETWORK**

(71) Applicant: Siemens Aktiengesellschaft, 80333 München (DE)
(72) Inventor: Friedrich, Raphael, 81541 München (DE); Schattleitner, Angela, 83104 Tuntenhausen (DE)

(57) **Abstract**

Method for dynamic configuration of an industrial data network (10), the industrial data network (10) comprising a network of interconnected physical data links configured by at least one data network controller (20) to form a virtual network of data links, comprising:
- receiving (P1) a request for a project-specific data network configuration in an engineering station (11),
- automatically generating (P2) based on said request a project-specific communication policy by selecting at least one configuration pattern out of at least one predefined configuration patterns in the engineering station (11),
- transmitting (P3) the project-specific communication policy to the at least one network controller (20), and
- configuring (P4) at least one data link transmission node (31) of the virtual network of data links according to the project-specific communication policy by the data network controller (20).

## Description

The present application relates to an engineering station, a network controller and a method for dynamic configuration of an industrial data network, wherein the industrial data network comprises of a network of interconnected physical data links configured by at least one data network controller to form a virtual network of data links.

Data networks, especially in industrial plants or factories, currently cannot be built up flexibly and dynamically by composing network zones with different "network services" from separate physical locations e.g. by integrating production networks that are geographically separate or by integrating services or servers managed by a different service provider for example a service provided by a cloud server, or integrating devices of a business partner at a remote business partner site under real time or near real time conditions. Further, network zones of industrial networks are protected by "air-gap", data diode or firewall rules that form a parameter of the network zone and guarantee non-interference with a production network and safety critical functions on the production network.

Such a strict separation also reduces or hinders a shared usage of devices in different industrial network zones, even if they are placed in the same physical location or proximity. For example, a three-dimensional printer which is connected to one network zone cannot be used by devices of another network zone without moving the device itself.

Therefore, it is the object of the present disclosure to provide means and a method for more flexible configuration of an industrial data-network.

The object is solved by features of the independent claims. The dependent claims contain further developments of the invention.

A first aspect of the invention relates to a method for dynamic configuration of an industrial data network, the data network comprising a network of interconnected physical data links configured by at least one data network controller to form a virtual network of data links, comprising:
- receiving a request for a project-specific data network configuration in an engineering station,
- automatically generating based on said request a project-specific communication policy by selecting at least one configuration pattern out of at least one predefined configuration pattern in the engineering station,
- transmitting the project-specific communication policy to the at least network controller and
- configuring at least one data link transmission node of the virtual network of data links according to the project-specific communication policy by the data network controller.

According to this method a virtualized overlay network is built up by implementing a communication policy defining the required communication connections. The communication policy is composed by selected configuration patterns. The network controller configures at least one data link transmission node of the virtual network of data links, e.g., a data switch, by creating and/or changing flow or forwarding tables according to the configuration pattern using a supported SDN control protocol, e.g. OpenFlow. The engineering station preferably has access to the configuration data of the industrial data network. This allows flexible and quick reaction on changing requirements in the configuration of the industrial data network.

In the preferred embodiment at least one of the selected configuration patterns of the project specific communication policy is changed, if the request comprises a notification of a changed event.

A change event can be triggered by, e.g., a timer in the engineering station, a signal from a sensor applied in or at a device of the industrial network and forwarded to the engineering station. The change event can also be triggered by an interaction of an operator of the industrial plant. This provides a high flexibility to react on manifold different situations by changing the virtual network of data links according these variety of events. This allows flexible reconfiguration of the project by for example predefined modules of the project specific communication policy being predefined configuration pattens.

These changes in the project-specific communication policy can be performed in the engineering station and transmitted back to the at least one network controller. The network controller required few data storage resources as only one applied project-specific communication policy has to be stored in the network controller.

In a preferred embodiment more than one project-specific communication policy instances are generated and transmitted to the at least one network controller and, if the request comprises an autofiction of a change event, the project-specific communication policy instance related to the change event is applied in the network controller.

This reduces the switch over time between different communication policy instances as they are already predefined and already available in the network controller. Furthermore the engineering station requires less processing power as the project-specific communication policy instances can be generated in advance with relaxed time-constraints.

In a further embodiment the change event is requested from the engineering station, from a device or from a human-machine-interface.

Thus, the engineering station can receive a request which is originating from the engineering station itself, e.g., by an expired timer. A request from a device can either be received directly from the device or via an intermediate node as, e.g., a plant configurator. This provides different network entities to trigger re-configuration of the industrial data network.

In a preferred embodiment the request and project-specific communication policy are received and transmitted respectively by applying cryptographical functions, preferably by cryptographical functions on network or application layer according to an OSI reference model.

This provides the configuration controlling information to be protected during transmission, especially with focus on integrity, authenticity and confidentiality of the communication. The cryptographic functions can be, e.g., applying the IP-security (IPsec) protocol on network layer or cryptographical functions on the application layer. This prevents content of the request or project-specific communication policy from being manipulated or pretended to be sent by a different sender. Encrypting the request and policy also prevents the information from being read by an unallowed person.

In a preferred embodiment a device requested to be added to the industrial data network is checked against network access control rules and factories specific attributes, and the project specific communication policy is adapted only, if the device complies to the rules and attributes.

Factory specific attributes are, e.g., a device compliance status, real time or safety properties or automation logic of the engineering station.

In a preferred embodiment additional parameters of the device are requested by the engineering station directly from the device, from an agent running on the device, from services running in the network and interacting with the device, from an asset management or from the engineering station.

This provides the possibility to characterize the device to be added in detail and to base the adapted configuration in which the device is integrated to detailed parameters of the device.

In the preferred embodiment the additional parameters are transmitted inside or outside of a configured communication connection of the industrial network to the engineering station.

A transmission inside a configured communication connection is also called inband and a transmission outside is called outband. Transmitting the additional parameters inside a configured communication connection requires an according communication protocol to be adapted to transport such additional information. This would provide specified procedure which has to be applied by all devices. Wherein an outband transmission of additional parameters provides a high flexibility with respect to type of additional parameters.

In a preferred embodiment the request for a project specific data network configuration has to be sent from the industrial controller to the engineering station, if a device is newly connected to the network zone controlled by an industrial controller.

This allows an integration of a new device compliant with the configuration and setup in the industrial controller.

In a preferred embodiment the device requested to be disconnected from the industrial data network is eliminated from all configuration pattern including the device.

This guarantees that all project-specific configuration policies comprising a configuration pattern which included the device are aligned and updated at the time this device is no longer available in the industrial data network.

A second aspect of the invention refers to an industrial network comprising a network of interconnected physical data links configured by at least one data network controller to form a virtual network of data links, an engineering station and at least one data link transmission node, configured to
- receive a request for a project-specific data network configuration in the engineering station,
- automatically generate based on that request a project specific communication policy by selecting at least one configuration pattern out of at least one predefined configuration pattern in the engineering station,
- transmit the project-specific communication policy to the at least one network controller and
- configure at least one data link transmission node according to the project-specific communication policy by the data network controller.

Such an industrial data network is highly flexible with request to its configuration, with respect to devices which are connected and with respect to the links which are configured, e.g., according to the bandwidth or the endpoint attributes. Devices and data links outside the premises of the industrial plant can also be interconnected to the industrial data link.

In the preferred embodiment the physical data links are Ethernet links, the virtual links are virtual Ethernet links implemented by virtual tunnel endpoints, and wherein the industrial data network is configured according to specifications of software defined network.

Ethernet links are very commonly used and therefore many already established industrial data networks can be adapted according to the invention. Further on software defined networks are specified by various standardization organizations and are based on such Ethernet based data networks. Data link transmission nodes are for example Ethernet switches or routers preferably enabled to be managed by software defined network specifications.

A third aspect of the present application refers to an engineering station comprising at least one processor configured to
- receive a request for project-specific data network configuration,
- automatically generate based on that request a project-specific communication policy by selecting at least one configuration pattern out of at least one predefined configuration pattern, and
- transmitter the project-specific communication policy to the at least one network controller.

Such an engineering station provides the network controllers with project-specific configuration policies which are modular structured and therefore flexibly composed by the configuration patterns and adapted to a wide variety of configuration request. This engineering station requires the ability to communicate with the network controller in receiving requests from the network or industrial controller but also loading policies onto the network controller. The engineering station is configured such to provide all features of the disclosed method.

A fourth aspect of the invention relates to a computer-program product comprising a non-transitory computer readable medium that stores computer executable code that when executed on a processor performs the described method.

An further aspect of the invention relates to a network controller for dynamic configuration of an industrial data network to form a virtual network of data links, comprising at least one processor, configured to
- receive a project-specific communication policy comprising at least one configuration pattern out of at least one predefined configuration pattern, and
- configure at least one data link transmission node of the virtual network of data links according to the project-specific communication policy.

In the following, embodiments of the present disclosure will be described in more detail and with reference to the accompanying drawings.
- Figure 1: schematically illustrates an embodiment of the inventive industrial data network;
- Figure 2: shows an embodiment of the inventive method as a flow chart diagram;
- Figure 3: shows a first embodiment of the inventive method as a message flow diagram;
- Figure 4: shows a second embodiment of the inventive method, where a new device is connected, as a message flow diagram;
- Figure 5: illustrates an embodiment of the inventive engineering station as block diagram;
- Figure 6: illustrates an embodiment of the inventive network controller as block diagram.

It is noted that in the following detailed description of embodiments the accompanying drawings are only schematic and the illustrated elements are not necessarily shown to scale. Rather, the drawings are intended to illustrate functions and cooperation of componence. Here, it is to be understood that any connection or cabling of functional blocks, devices, components or other physical or functional elements could also be implemented by an indirect connection or cabling, e.g., by one or more intermediate elements. A connection or cabling of elements or components can be for example be implemented by a wire-based, a wireless connection and/or a combination of a wire-based and a wireless connection. Functional blocks can be implemented by dedicated hardware, by firmware and/or software installed on programable hardware and/or by a combination of dedicated hardware and firmware or software.

In the following drawings the same components are assigned with the same reference numbers and if not explicitly mentioned, comply to each other.

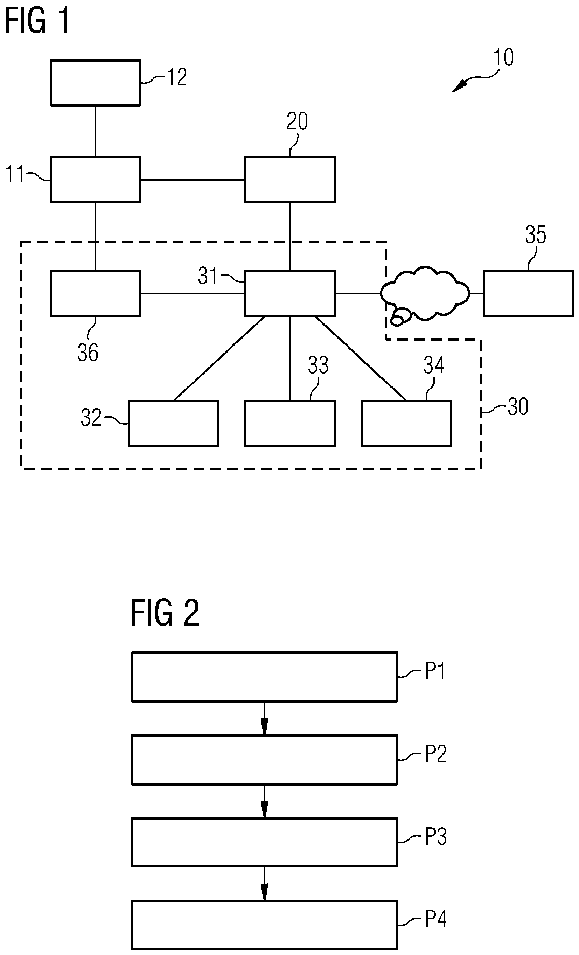

Figure 1 illustrates an industrial data network 10 comprising an engineering station 11 which receives a request for project-specific data network configuration. Such project-specific data network configuration can be received either from a configurator 12 requesting a project specific network configuration in an extent of a new configuration for one or several industrial network zones to the extent of changing one or several devices or a dedicated data link. The engineering station 11 can also receive a request from an industrial controller 36 which controls the functionality of the devices in the network zone 30 from the operational point of view. The engineering station 11 is connected to the network controller 20. The engineering station 11 can also receive a request for a project-specific data network configuration from the network controller 20, e.g. to add a device into the industrial network zone 30. The engineering station 11 generates a project-specific communication policy in accordance to the request and transmits it to the network controller 20.

The network controller 20 is configured in accordance to software defined network specifications to communicate to one or several data link transmission nodes 31, e.g, according to standardized software defined network protocols and specifications. The network zone 30 comprises at least one device 32, 33, 34 and optionally remote located device 35.

The described devices 32, ..., 35, transmission nodes 31, controllers 20 and industrial controller 36 are interconnected by physical data links which are the basis for a virtual data network configured by the data controller. The physical data links are preferably Ethernet links, the virtual network of data links is composed of virtual Ethernet links, that are implemented by virtual tunnel endpoints. A virtualized overlay network is built up by implementing a communication policy comprising the required connections to form the virtual overlay network through configuration of one or more configuration pattern which provide flow or forwarding tables in data link transmission nodes 31 for example in a network switch. The communication policy is configured in the engineering station 11 of the industrial network 10.

The industrial network 10 can further comprise a communication security layer, that protects data in transit with respect to integrity and availability. Data in transit means all data which are transmitted on the virtual data network inside the industrial plant or/and also transmitted via public network, e.g., via internet to connect remote devices 35 or services like a server located in a cloud server. This communication security layer can be implemented on higher layers, e.g., transport or application layer regarding the OSI reference model, with standard cryptographic functions, e.g., secured message authentication code.

The industrial network 10 comprised a network access control service through an industrial gatekeeper, e.g. "Zero trust" gatekeeper that constitutes a policy decision point and implements a network access policy. Besides device identity assessment by standardized network access control functions like MAC-Filtering, the gatekeeper may assess factory specific attributes, e.g. device compliance status, real time and safety property or automation logic of the engineering station of the devices 32, 33, 34, 35 before admission to the network.

The data link transmission node 31 that enforces the network access control policy, interacts with a gatekeeper by a control protocol, e.g., software defined network control protocol, like OpenFlow. The gatekeeper comprises a policy engine and a policy administrator component as described in an NIST SP 800-207 (draft) chapter 3 "Zero Trust Architecture Logical Components". The gatekeeper functionality can either be configured as a separate entity or it can be integrated into the network controller 20 or the engineering station 11 or distributed onto both the network controller 20 and the engineering station 11.

The method for dynamically configuring such an industrial data network 10 is depicted schematically in figure 2. In an initial state there is the industrial data network 10 comprising a network of interconnected physical data links configured by at least one network controller 20 based on a communication policy to form a virtual network of data links. In the first step P1 a request for a project-specific network configuration is received in the engineering station 11. Next, a project-specific communication policy is automatically generated based on said request by selecting at least one configuration pattern out of at least one predefined configuration patterns in the engineering station, see step P2. This project-specific communication policy is transmitted to at least one network controller 20, see step P3.

The transmission of the request and the project specific communication policy on data connections from the network controller to the engineering station and the network controller to the at least one data links transmission node 31 are secured connections applying cryptographic functions preferably on network or application layer according to the OSI reference model.

The network controller 20 configures the at least one data link transmission node 31 in accordance to the project specific communication policy, especially forwarding the respective configuration pattern, to build up a respective virtual data network, see step P4.

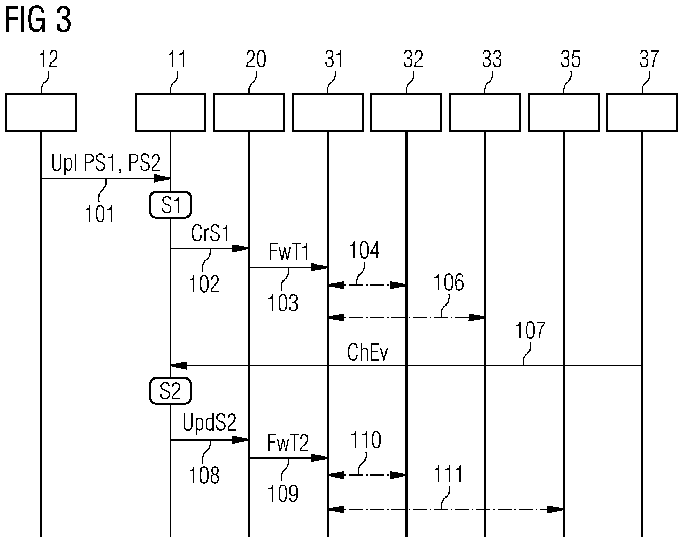

Figure 3 shows an example for configuring a virtual datanetwork based on two different production scenarios PS1 and PS2 provided by an, e.g., plant configurator 12 in the industrial network 10. The configuration example is performed on the industrial data network 10 and components as shown in figure 1. The uploaded plant scenarios PS1 and PS2 include a request 101 for generating a respective project-specific data network configuration. The engineering station 11 generates automatically based on this request 101 a project-specific communication policy S1 for the first scenario by selecting at least one configuration pattern out of at least one predefined configuration pattern. At the same time the engineering station 11 can already generate a second project-specific communication policy S2 for the requested plant scenario PS2 in the same way as described for plant scenario PS1 and stores it in the engineering station 11.

The engineering station 11 transmits the project-specific communication policy S1 to the network controller 20, see 102. The network controller 20 forwards the configuration pattern T1 included in the project-specific communication policy S1, to configure the respective data link transmission node 31, see 103. The switch 31 configures for example a data link to device 32, see 104 and to device 33, see 106 accordingly and thereby establishes virtual connections.

On receiving a request comprising a notification of a change event, see 107, from, e.g., a human machine interface 37 in the engineering station 11, see 107, the engineering station 11 applies the project-specific communication policy S2 created and stored in advance and transmits it to the network controller 20, see 108. The network controller 20 configures the required data transmission node, here for example switch 32, in accordance to the configuration pattern T2 of the project-specific communication policy S2 and configures device 32 and 35 accordingly, see 110 and 111.

As an alternative or additional possibility, the engineering station 11 generates only one project specific communication policy S1 for plant scenario PS1 and changes on receipt of a request comprising a notification of a change event at least one of the selected configuration pattern such to provide a project-specific communication policy for plant scenario PS2.

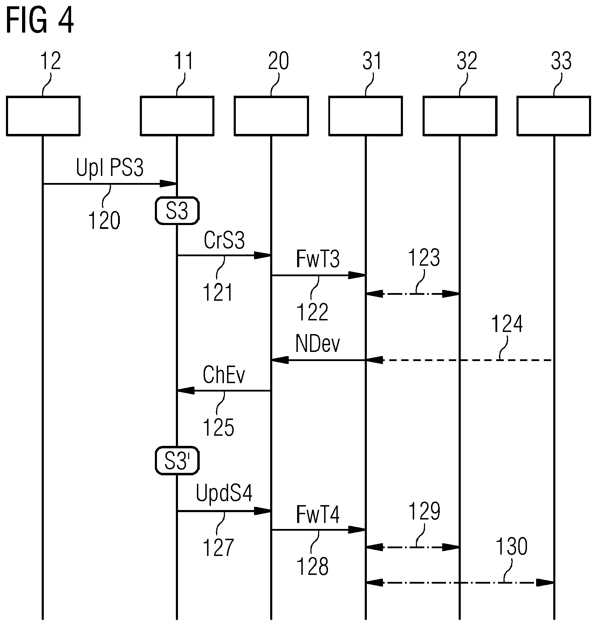

Figure 4 shows an example of a dynamic configuration change due to a new added device to the data network.

Here the engineering station 11 receives a request for a project-specific data network configuration according to plant scenario PS3 from a plant configurator 11, see 120. The engineering station 11 generates automatically according to the request a project specific communication policy and sends the policy to the network controller 20, see 121. The network controller 20 instructs the data links transmission node 31 accordingly to connect device 32, see 122, 123. When the device 33 shall be additionally connected to the industrial network 10, the device 33 transmits a message, see 124, to the network controller 20, notifying that a new device 33 requests to be added. The network controller 20 sends a request with a notification of a change event, which is now the request to add new device 33, to the engineering station 11, see 125.

In the engineering station 11 a new or update project-specific communication policy S3' is generated, e.g., by changing the project-specific communication policy S3 by at least configuration pattern. Before the configuration is changed and the new device 33 is added, the device 33 is checked against network access control rules and factory specific attributes, and only if the device 33 complies with its rules and attributes, the configuration policy is changed to include the device 33 into the industrial network 10. Additional parameters of the device 33 can be requested by the engineering station 11 directly from the device or, e.g., from an agent running on the device or a service running on the network and interacting with a device, e.g., a health check service. Also, parameters can be requested from an access management node or the plant configurator 12.

These parameters can be transmitted inside of a configured communication connection of the industrial data network 10 to the engineering station 11. The engineering station 11 can also receive such information outside of such configured communication connection of the industrial data network, e.g. by wireless connection via a 5G mobile network.

In the case shown in figure 4, it is assumed that the device 33 which requested to be added to the data network 10 passes all the checks and fulfils the network access control and security requests. The engineering station 11 will adapt the project-specific communication policy according to the new scenario S3' including device 33 in the network and provide the adapted project-specific communication policy S4 to the network controller 20, see 127. The network controller 20 forwards the respective information or configuration pattern T4 to the switch 31, see 128, which configures the links to the related devices, here device 32 and 33, see 129, 130. With that the virtual data network is adapted to the new situation and can run without further manual interaction by an operator.

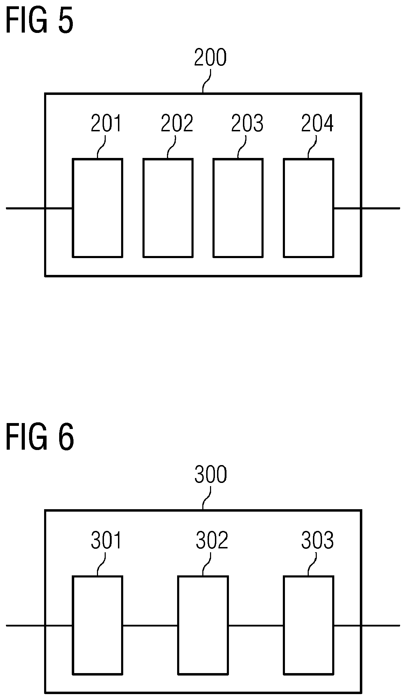

Figure 5 shows an engineering station 200. It comprises an input interface 201 as well as an output interface 204. The input interface 201 is configured to receive a request for a project-specific data network configuration. The output interface 204 is configured to transmit the project-specific communication policy to the at least one network controller, which is required to instruct a data link transmission node to the requested link configuration.

The engineering station 200 further comprises a processing unit 202 generating automatically based on a request a project specific communication policy by selecting at least one configuration pattern out of at least one predefined configuration pattern. The engineering station 200 may contain a further control unit 203 which controls the communication to a network access controller. The input and output interfaces 201 and 204 also include functionality to enable the engineering station 200 to communicate with a configurator 12, a device 32, 33, 34 and with the network controller 20, to load configurations to the network controller and to send instructions from the engineering station 200 to the network controller 20 and to receive the according responses. Further on, the engineering station is configured such to create variants of project-specific communication policies to store them and to switch between different project-specific communication policies on received change events.

The engineering station 200 and especially the output interface 204 is configured to transmit changed, updated or new project-specific communication policies to the network controller 20. In a preferred embodiment the plant configurator 12 already provides predefined project variants. Predefined configuration patterns can either be received in the engineering station from the plant configurator 12 or generated in advance by the engineering station 200 itself based on connectivity and configuration schemes provided in advance. For example, predefined configuration patterns are created for adding a new industrial controller, new sensors, new machines which are dynamically connected or disconnected, transfer data to remote device. Besides a change event, further types of events may exist for different kinds of network configurations, for example events when link parameters have to be change, e.g. required bandwidth is changed, events to report errors on any of the devices or also on data links transmission nodes or network controllers.

If an industrial device 32,.., 36 is attached to a port of a virtual endpoint, during connection setup, the device provides a set of parameters like identity, compliance status, classification parameters, to the data links transmission node, e.g. switch, which forwards the data to the network controller, that interacts with the engineering station or a gatekeeper service or process, which is available as a separate or integrated part of the network controller.

Figure 6 shows a network controller 300. The network controller 300 comprises a first interface unit 301, a second interface unit 303 and a control unit 302. The first interface unit 301 is configured to receive a project-specific communication policy comprising at least one configuration pattern out of at least one predefined configuration pattern. The second interface unit 303 is configured to transmit a configuration for at least one data link transmission node of the virtual network of data links according to the project-specific communication policy. The controller 302 is configured to process messages from at least one data link transmission node, reporting about new devices or data link attributes to be added or changed. The first interface unit 301, a second interface unit 303 and a control unit 302 are physically implement by at least one processor.

It is to be understood at the above description of example is intended to be illustrative and that the illustrated concepts are susceptible to various modification.

All methods and method steps can be implemented by corresponding means in the engineering station or in the industrial data network which are adapted for performing the respective method steps. All functions provided by particular means can be a method step or a method. The invention is not limited to the described examples. The invention also comprises all combination of any of the described or features.

## Claims

1. Method for dynamic configuration of an industrial data network (10), the industrial data network (10) comprising a network of interconnected physical data links configured by at least one network controller (20) to form a virtual network of data links, comprising:
- receiving (P1) a request for a project-specific data network configuration in an engineering station (11),
- automatically generating (P2) based on said request a project-specific communication policy by selecting at least one configuration pattern out of at least one predefined configuration patterns in the engineering station (11),
- transmitting (P3) the project-specific communication policy to the at least one network controller (20), and
- configuring (P4) at least one data link transmission node (31) of the virtual network of data links according to the project-specific communication policy by the data network controller (20).

2. Method according to claim 1, wherein at least one of the selected configuration patterns of the project-specific communication policy is changed, if the request comprises a notification of a change event.

3. Method according to claim 1, wherein more than one project-specific communication policy instances are generated and transmitted to the at least one network controller (20), and, if the request comprises a notification of a change event, the project-specific communication policy instance related to the change event is applied in the network controller (20).

4. Method according to claim 2 or 3, wherein the change event is requested from the engineering station (11), a device (32,...,34) or a human-machine-interface (37).

5. Method according to any of claims 2 to 4, wherein the request and the project-specific communication policy are received and transmitted respectively by applying cryptographical functions, preferably by cryptographical functions on network or application layer according to the OSI reference model.

6. Method according to claim 1, wherein a requested device (35) to be added to the industrial data network (10) is checked against network access control rules and factory specific attributes, and the project-specific communication policy is adapted only, if the device complies to the rules and attributes.

7. Method according to claim 6, wherein additional parameters of the device (35) are requested by the engineering station (11) directly from the device (35), from an agent running on the device (35), from services running in the industrial data network (10) and interacting with the device (35) from an asset management or from the engineering station (10).

8. Method according to claim 7, wherein the additional parameters are transmitted inside or outside of a configured communication connection of the industrial network to the engineering station (11).

9. Method according to any of the proceeding claims, wherein if a device (35) is newly connected to a network zone (30) controlled by an industrial controller (20), the request for a project-specific data network configuration has to be sent from the industrial controller (36) to the engineering station (11).

10. Method according to any of the proceeding claims, wherein the device requested to be disconnected from the industrial data network (10) is eliminated from all configuration pattern including the device.

11. Industrial data network (10) comprising a network of interconnected physical data links configured by at least one network controller (20) to form a virtual network of data links, and an engineering station (11), configured to:
- receive a request for a project-specific data network configuration in the engineering station (11),
- automatically generate based on said request a project-specific communication policy by selecting at least one configuration pattern out of at least one predefined configuration patterns in the engineering station (11),
- transmit the project-specific communication policy to the at least one network controller (20), and
- configure at least one data link transmission node according to the project-specific communication policy by the data network controller (20).

12. Industrial data network (10) according to claim 11, wherein the physical data links are Ethernet links, the virtual links are virtualized Ethernet links implemented by virtual tunnel end points, and wherein the industrial data network is configured according to specifications of software defined network.

13. Network Controller (300) for dynamic configuration of an industrial data network (10) to form a virtual network of data links,
comprising at least one processor, configured to
- receive a project-specific communication policy comprising at least one configuration pattern out of at least one predefined configuration pattern, and
- transmit a configuration for at least one data link transmission node of the virtual network of data links according to the project-specific communication policy.

14. Engineering Station (200), comprising at least one processor, configured to:
- receive a request for a project-specific data network configuration,
- automatically generate based on said request a project-specific communication policy by selecting at least one configuration pattern out of at least one predefined configuration pattern,
- transmit the project-specific communication policy to the at least one network controller (20).

15. A computer program product comprising a non-transitory computer readable medium that stores computer executable code that when executed on a processor performs the method according to claims 1 to 10.
